# EUROPÄISCHE PATENTSCHRIFT

(11) **EP 2 581 396 B1**
(45) Veröffentlichungstag und Bekanntmachung des Hinweises auf die Patenterteilung: **02.07.2014**
(21) Anmeldenummer: 11185176.2
(22) Anmeldetag: 14.10.2011
(51) Int. Cl.: C08G 18/08, C08G 18/28, C08G 18/34, C08G 18/48, C08G 18/66, C08G 18/67, C08G 18/75, C08G 18/76, C08G 18/79, C09D 175/16

(54) **Verfahren zur Herstellung von niedrigviskosen, wasserverdünnbaren Urethan(meth)acrylaten**
Method for producing low viscosity, water soluble urethane(meth)acrylates
Procédé de fabrication d'uréthane(méth)acrylates pouvant se dissoudre dans l'eau et peu visqueux

(43) Veröffentlichungstag der Anmeldung: 17.04.2013
(73) Patentinhaber: Allnex IP S.à.r.l., 1660 Luxembourg (LU)
(72) Erfinder: Dr. Ludewig Michael, Leverkusen (DE); Dr. Sommer Stefan, Leverkusen (DE); Dr. Fischer Wolfgang, Leverkusen (DE); Yuva Nusret, Leverkusen (DE)
(74) Vertreter: Destryker, Elise Martine

(56) Entgegenhaltungen:
- EP-A1- 0 872 502
- EP-A1- 1 655 318
- WO-A1-2009/095432

## Beschreibung

Die vorliegende Erfindung betrifft ein Verfahren zur Herstellung von hochreaktiven, niedrigviskosen und wasserverdünnbaren Umsetzungsprodukten von Polyisocyanaten, die aktivierte unter Einwirkung aktinischer Strahlung mit ethylenisch ungesättigten Verbindungen unter Polymerisation reagierende Gruppen enthalten. Die vorliegende Erfindung betrifft weiterhin die durch dieses Verfahren hergestellten Produkte sowie ihre Verwendung.

Die Härtung von aktivierten Doppelbindungen tragenden Beschichtungssystemen durch aktinische Strahlung ist bekannt und technisch etabliert. Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999). Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, einerseits bereits niedrigviskose Lackrohstoffe zu verwenden und anderseits darüber hinaus notwendige Viskositätseinstellungen mit Wasser als Lösemittel durchführen zu können.

Polyurethandispersionen, die durch Wasser in ihrer Viskosität eingestellt werden, sind weitverbreitet und haben sich auch als strahlenhärtende Rohstoffe in der Lackindustrie etabliert. Allerdings sind solche Dispersionen durch den notwendigen Dispergierschritt schwieriger herzustellen, und haben in der Regel nur einen geringen Festkörpergehalt von 30 bis 50 Gew.-%. Der hohe Wassergehalt dieser Dispersionen muss nach der Applikation und vor der Aushärtung wieder entfernt werden. Daher reduziert sich einerseits die mögliche Auftragsdicke des Materials und andererseits ist eine längere Ablüftungszeit erforderlich.

Es sind auch wasserverdünnbare strahlenhärtende Polyurethanysteme bekannt geworden, mit denen es möglich ist sehr hohe Festkörpergehalte von mehr als 80 Gew.-% zu erreichen. Diese sind in der Regel auf Polyethylenoxidpolyolen basierende Polyurethane, die sich mit wenig Wasser zu einer klaren Lösung verdünnen lassen.

Ein solches strahlenhärtbares, wasserverdünnbares Polyurethansystem ist beispielsweise in WO-A 2009/095432 beschrieben. Die offenbarten Bindemittel sind zwar mit Wasser verdünnbar, allerdings sind sie nach Strahlenhärtung sehr weich und gegen Chemikalien unbeständig. Die Lagerstabilität der mit Wasser verdünnten Lösung ist verbesserungsbedürftig. Weiterhin ist auch die UV-Reaktivität dieser Bindemittel verbesserungswürdig.

Auch in DE-A 102010001956 werden wasserkompatible, strahlenhärtbare Polyurethansysteme beschrieben. Die offenbarten Bindemittel sind ebenfalls mit Wasser verdünnbar, allerdings sind sie nach Strahlenhärtung sehr weich und gegen Chemikalien unbeständig. Die Lagerstabilität der mit Wasser verdünnten Lösung ist ebenfalls verbesserungsbedürftig. Auch diese Produkte haben eine verbesserungswürdige UV-Reaktivität.

Es war daher Aufgabe der vorliegenden Erfindung, ein Verfahren zur Herstellung eines strahlenhärtbaren Polyurethan(meth)acrylats zur Verfügung zu stellen, das als unverdünntes System mit einem Festkörpergehalt von 100 Gew.-% besonders niedrigviskos ist, d.h. Scherviskositäten bei 23°C von ≤100 000 mPas, besonders bevorzugt ≤ 50 000 mPas und besonders bevorzugt ≤ 30 000 mPas aufweist, und über einen weiten Bereich mit Wasser verdünnbar ist. Weiterhin soll die UV-Reaktivität erhöht sein. Zudem soll das mit Wasser verdünnte strahlenhärtbare Polyurethan(meth)acrylat lagerstabil sein. Die strahlengehärteten Filme sollen eine erhöhte Pendelhärte aufweisen und eine ausreichende Beständigkeit gegenüber Chemikalien aufweisen. Die Viskosität wird mit einem Kegel-Platte Rotationsviskosimeter, MCR 51 der Firma Anton-Paar, DE, mit einer Schergeschwindigkeit von 50 s⁻¹ nach ISO/DIS 3219:1990 bestimmt.

Überraschend wurde ein Verfahren zur Herstellung von niedrigviskosen, wasserverdünnbaren Polyurethan(meth)acrylaten gefunden, dadurch gekennzeichnet, dass die niedrigviskosen, wasserverdünnbaren Polyurethan(meth)acrylate erhältlich sind durch Umsetzung der Komponenten
(a) mindestens ein oligomeres Polyisocyanat mit durchschnittlich mindestens drei Isocyanatgruppen,
(b) optional mindestens ein weiteren Isocyanat mit mindestens zwei Isocyanatfunktionen
(c) mindestens ein Polyoxyalkylenmono-ol,
(d) mindestens ein Hydroxyalkyl(meth)acrylat,
(e) mindestens ein Polyoxyalkylenpolyol auf Basis eines Startermoleküls mit mindestens drei Hydroxyfunktionen, das teilweise durch Veresterung mit (Meth)acrylsäure so umgesetzt ist, dass noch durchschnittlich 0,2 bis 1,5, bevorzugt 0,3 bis 1,3 und besonders bevorzugt 0,5 bis 1,2 Hydroxyfunktionen verbleiben,
(f) optional mindestens eine Verbindung mit mindestens einer gegenüber Isocyanat reaktiven Gruppe und mindestens einer ionischen und/oder potentiell ionischen Funktion
dadurch gekennzeichnet, dass das Reaktionsprodukt einen NCO-Gehalt von weniger als 0,5% aufweist.

Der Begriff "wasserverdünnbar" im Sinne der Erfindung bedeutet, dass die erfindungsgemäßen Polyurethane mit Wasser mischbar sind. Das bedeutet, die Viskosität der erfindungsgemäßen Polyurethane übersteigt bei der Verdünnung mit Wasser nicht die Viskosität des erfindungsgemäßen Polyurethans mit einem Festkörpergehalt von 100 Gew.%. Der Festkörpergehalt von 100 Gew.-% bedeutet, dass das Polyurethansystem nicht mit Wasser verdünnt wurde.

Ein weiterer Gegenstand der Erfindung sind wasserverdünnbare Urethan(meth)acrylate erhältlich nach dem erfindungsgemäßen Verfahren.

Ein weiterer Gegenstand der Erfindung ist die Verwendung der erfindungsgemäßen Urethan(meth)acrylate, erhältlich nach dem erfindungsgemäßen Verfahren, für die Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen.

"(Meth)acrylat" bezieht sich im Rahmen dieser Erfindung auf entsprechende Acrylat- oder Methacrylatfunktionen oder auf eine Mischung beider.

Oligomere Polyisocyanate mit durchschnittlich mindestens drei NCO-Gruppen (a) sind Polyisocyanate mit Isocyanurat-, Biuret-, Allophanat- und/oder Iminooxadiazindiongruppen. Geeignete oligomere Polyisocyanate sind beispielsweise solche auf Basis von 1,3-Cyclohexandiisocyanat, 1-Methyl-2,4-diisocyanato-cyclohexan, 1-Methyl-2,6-diisocyanatocyclohexan, Tetramethylen-diisocyanat, 4,4'-Diisocyanatodiphenylmethan, 2,4'-Diisocyanatodiphenylmethan, 2,4-Diisocyanatotoluol, 2,6-Diisocyanatotoluol, α,α,α',a,"-Tetramethyl-m- oder p-Xylylendiisocyanat, 1,6-Hexamethylendiisocyanat, 1-Isocyanato-3,3,5-trimethyl-5-is ocyanatomethylcyclohexan (1-Isocyanato-3,3,5-trimethyl-5-isocyanatomethylcyclohexan oder IPDI), 4,4'-Diisocyanato-dicyclohexylmethan, 1,3-Bis(isocyanatomethyl)benzol (XDI), 1,3-Bis(1-isocyanato-1-methylethyl)-benzol (TMXDI) und deren Mischungen. Bevorzugt sind oligomere Polyisocyanate auf Basis des 1,6-Hexamethylendiisocyanats (HDI), besonders bevorzugt sind oligomere Polyisocyante mit Isocyanuratgruppen auf Basis von 1,6-Hexamethylendiisocyanats (HDI).

Als isocyanathaltige Verbindungen (b) kommen aromatische, aliphatische und cycloaliphatische Polyisocyanate in Betracht. Geeignete Polyisocyanate sind Verbindungen der Formel Q(NCO)ₙ mit einem mittleren Molekulargewicht unter 800, worin n eine Zahl von 2 bis 4 und Q einen aromatischen C₆-C₁₅-Kohlenwasserstoffrest, einen aliphatischen C₄-C₁₂-Kohlenwasserstoffrest oder einen cycloaliphatischen C₆-C₁₅Kohlenwasserstoffrest bedeuten, beispielsweise Diisocyanate aus der Reihe 2,4-/2,6-Toluoldiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, 1,6-Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyldicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische.

Ebenfalls geeignet als isocyanathaltige Verbindungen (b) sind Umsetzungsprodukte der vorgenannten Isocyanate mit sich selbst oder untereinander zu Polyisocyanaten mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200 und EP-A 0 798 299 beispielhaft beschrieben sind.

Polyoxyalkylenmono-ole (c) werden erfindungsgemäß als nichtionisch hydrophilierend wirkende Verbindungen eingesetzt. Diese Polyoxyalkylenmono-ole enthalten einen Anteil von 30 Gew.-% bis 100 Gew.-% an Bausteinen, die vom Ethylenoxid abgeleitet sind. Vorzugsweise werden im statistischen Mittel 5 bis 70, bevorzugt 7 bis 55 Ethylenoxideinheiten pro Molekül aufweisende Polyoxyalkylenmono-ole eingesetzt, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Solche Verbindungen weisen eine OH-Zahl von 18 bis 238 mg KOH/g, vorzugsweise von 56 bis 187 mg KOH/g und ganz besonders bevorzugt von 70 bis 160 mg KOH/g auf.

Die OH-Zahl wird titrimetrisch gemäß DIN 53240-2 bestimmt.

Geeignete Startermoleküle zur Herstellung dieser Polyoxyalkylenmono-ole sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole, besonders bevorzugte Startermoleküle sind Methanol oder Ethanol.

Für die Alkoxylierungsreaktion geeignete Alkylenoxide sind beispielsweise Ethylenoxid, 1-Butenoxid und Propylenoxid, bevorzugt Ethylenoxid und Propylenoxid, die in beliebiger Reihenfolge oder auch im Gemisch bei der Alkoxylierungsreaktion eingesetzt werden können.

Bei den Polyoxyalkylenmono-ole handelt es sich entweder um reine Polyethylenoxidpolyethermono-ole oder gemischte Polyalkylenoxidpolyethermono-ole, deren Alkylenoxideinheiten zu mindestens 30 mol-%, bevorzugt zu mindestens 50 mol-% aus Ethylenoxideinheiten bestehen. Besonders bevorzugt ist der Einsatz reiner Polyethylenoxidmono-ole.

Unter Hydroxyalkyl(meth)acrylaten (d) im Sinne der Erfindung werden Verbindungen verstanden, die neben (durchschnittlich) einer Hydroxyfunktion eine oder mehrere (Meth)acrylatgruppen enthalten. Die verschiedenen Funktionen sind dabei durch kurzkettige (C2-C12) lineare oder verzweigte Alkylketten verbunden. Beispiele für solche Verbindungen sind Hydroxyethyl(meth)acrylat, Hydroxypropyl(meth)acrylat, Hydroxybutyl(meth)acrylat, 3-Hydroxy-2,2-dimethylpropyl(meth)acrylat, Glycerindi(meth)acrylat, Trimethylolpropandi(meth)acrylat, Pentaerythrittri(meth)acrylat oder Dipentaerythritpenta-(meth)acrylat.

Bevorzugt ist die Verwendung von Hydroxyethyl(meth)acrylat, Hydroxypropyl(meth)acrylat und Hydroxybutyl(meth)acrylat. Ganz besonders bevorzugt sind Hydroxyethylacrylat und Hydroxypropylacrylat.

Erfindungswesentlich ist der Einsatz von mindestens eines Polyoxyalkylenpolyols auf der Basis von einem Startermolekül mit mindestens drei Hydroxyfunktionen (e). Diese Komponente führt einerseits zu einer höheren Wasserkompatibilität und trägt andererseits zu der hohen Reaktivität der erfindungsgemäßen Produkte bei. Komponente e) sind partiell veresterte kurzkettige alkoxylierte Polyole, die pro Hydroxygruppe durch durchschnittlich 0,5 bis 8,0, vorzugsweise 3,0 bis 6,0 Alkylenoxid-Einheiten aufgebaut wurden, wobei die Alkylenoxid-Einheiten vorzugsweise Ethylenoxideinheiten sind.

Als Startermoleküle kommen niedermolekulare Polyole bis zu einem Molekulargewicht von 400 g/mol, wie beispielsweise Trimethylolethan, Trimethylolpropan, Glycerin, Pentaerythrit, Di-trimethylolpropan oder Dipentaerythrit in Frage.

Die Polyoxyalkylenpolyole sind teilweise mit (Meth)acrylsäure, vorzugsweise mit Acrylsäure verestert. Dabei ist der Veresterungsgrad so gewählt, dass im Schnitt noch 0,2 bis 1,5, vorzugsweise 0,3 bis 1,3, besonders bevorzugt 0,5 bis 1,2 Hydroxylgruppen frei bleiben und die restlichen Hydroxylgruppen mit (Meth)acrylsäure verestert sind. Die Herstellung solcher teilacrylierten alkoxylierten, vorzugsweise ethoxylierten Polyole ist z.B. in EP-A 0900778, EP-A 0976716 oder WO-A 2003/022902 beschrieben.

Verbindungen, die unter Komponente (e) fallen, weisen bevorzugt OH-Zahlen (OHZ) von 20 mg KOH/g bis 200 mg KOH/g, besonders bevorzugt 40 mg KOH/g bis 150 mg KOH/g, ganz besonders bevorzugt 50 bis 100 mg KOH/g Substanz auf.

Die Komponente (f) umfasst Verbindungen mit mindestens einer gegenüber Isocyanat reaktiven Gruppe und zusätzlich mindestens einer ionischen und/oder potentiell ionischen Gruppe. Sie wirkt auf die erfindungsgemäßen Polyurethan(meth)acrylate hydrophilierend.

Zu den hydrophilierend wirkenden Gruppen gehören ionische Gruppen (f1) und/oder die aus potentiell ionischen Gruppen (f2) hervorgehenden (beispielsweise durch Salzbildung) ionischen Gruppen (f1), die anionischer Natur (f1.1) wie beispielsweise Sulfonium-, Phosphonium-, Carboxylat-, Sulfonat-, Phosphonat-Gruppen oder kationischer Natur (f1.2) wie beispielsweise Ammonium-Gruppen sein können und/oder potentiell ionische Gruppen (f2), d.h. Gruppen, die beispielsweise durch Salzbildung in ionische Gruppen (f1) überführt werden können. Sie werden durch isocyanatreaktive Gruppen in die Makromoleküle eingebaut. Bevorzugt geeignete isocyanatreaktive Gruppen sind Hydroxyl- und Aminogruppen.

Verbindungen enthaltend potentiell ionische Gruppen (f2) umfassen Verbindungen mit potentiell anionischen Gruppen (f2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen (f2.2) wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthaltend potentiell anionische Gruppen (f2.1) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder -butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, die Additionsprodukte von Acrylsäure an Diamine im Verhältnis 1:1, wie z.B. an Isophorondiamin (EP-A 916 647, Beispiel 1) oder an Ethylendiamin (PUD-Salz oder N-(2-Aminoethyl)-β-alanin), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen (f2) sind Carboxyl-, Sulfonsäuregruppen und/oder tertiäre Aminogruppen enthaltende Verbindungen wie beispielsweise 2-(2-Amino-ethylamino-)ethansulfonsäure, 3-(Cyclohexylamino)propan-1-sulfonsäure, die Additionsprodukte von Acrylsäure an Diamine im Verhältnis 1:1, wie z. B. an Isophorondiamin (EP-A 916 647, Beispiel 1) oder an Ethylendiamin (PUD-Salz oder N-(2-Aminoethyl)-β-alanin), Hydroxypivalinsäure, Dimethylolpropionsäure, Triethanolamin, Tripropanolamin, N-Methyldiethanolamin und/oder N,N-Dimethylethanolamin.

Ganz besonders bevorzugt enthält Komponente (f) als Verbindungen mit potentiell ionischen Gruppen die Additionsprodukte von Acrylsäure an Diamine im Verhältnis 1:1, wie z. B. an Isophorondiamin (EP-A 916 647, Beispiel 1) oder an Ethylendiamin (PUD-Salz oder N-(2-Aminoethyl)-β-alanin).

Die unter Komponente (f) genannten Säuren werden durch Umsetzung mit Neutralisationsmitteln, wie z. B. Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisation über 100%, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente (f) genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure, Milchsäure, Methan-, Ethan- und / oder p-Toluolsulfonsäure, in die entsprechenden Salze überführt. Der Neutralisationsgrad liegt dabei bevorzugt zwischen 50 und 125%.

Die unter Komponente (f) aufgeführten Verbindungen können auch in Mischungen verwendet werden.

Der Einsatz der Komponente (f) ist allerdings nicht bevorzugt.

Komponente (a) wird in Mengen von 20 bis 50 Gew.-%, bevorzugt von 25 bis 40 Gew.-%, besonders bevorzugt 26 bis 35 Gew.-%, Komponente (b) in Mengen von 0 bis 20 Gew.-%, bevorzugt von 0 bis 10 Gew.-%, besonders bevorzugt von 0 Gew.-%, Komponente (c) in Mengen von 10 bis 30 Gew.-%, bevorzugt von 12 bis 25 Gew.-%, besonders bevorzugt von 13 bis 20 Gew.-%, Komponente (d) in Mengen von 4 bis 20 Gew.-%, bevorzugt von 5 bis 15 Gew.-%, ganz besonders bevorzugt von 6 bis 12 Gew.-%, Komponente (e) in Mengen von 25 bis 60 Gew.-%, bevorzugt von 30 bis 55 Gew.-%, besonders bevorzugt von 40 bis 52 Gew.-% und Komponente (f) in Mengen von 0 bis 10 Gew.-%, bevorzugt von 0 bis 5 Gew.- %, ganz besonders bevorzugt von 0 Gew-% eingesetzt, mit der Maßgabe, dass die Summe der Gew.-% der Komponenten (a) bis (f) 100 beträgt.

Die Umsetzung der isocyanathaltigen Komponenten (a) und gegebenenfalls (b) mit den isocyanatreaktiven Komponenten (c), (d), (e), gegebenenfalls (f) erfolgt in einer dem Fachmann an sich bekannten Urethanisierungsreaktion.

Dabei werden die isocyanathaltigen Verbindungen (a) und gegebenenfalls (b) mit den isocyanatreaktiven Komponenten (c), (d), (e), gegebenenfalls (f) im Äquivalentverhältnis 1:0,9 bis 1:1,5, bevorzugt 1:1 bis 1:1,2 und besonders bevorzugt 1:1 bis 1:1,05 umgesetzt.

Die Neutralisation der optionalen Komponente (f) kann vor, während oder nach der Umsetzung mit den Komponenten (a) und gegebenenfalls (b) erfolgen.

Die Umsetzung wird bei Temperaturen von 25 bis 100 °C, vorzugsweise 40 bis 80 °C über einen Zeitraum von 2 bis 30 Stunden, vorzugsweise 4 bis 15 Stunden durchgeführt.

Dabei wird die Reaktion so lange geführt, bis ein Rest-NCO-Gehalt von weniger als 0,5 %, bevorzugt weniger als 0,3 % erreicht ist.

Zur Beschleunigung der Reaktion ist es bevorzugt, Katalysatoren einzusetzen. Dazu kommen dem Fachmann an sich bekannte Urethanisierungskatalysatoren wie z.B. tertiäre Amine oder Lewis-Säuren in Frage. Beispielhaft genannt seien Organozinnverbindungen, wie z.B. Dibutylzinndiacetat, Dibutylzinndilaurat, Dibutylzinn bis acetoacetonat oder Zinkverbindungen, wie z.B. Zinkacetylacetonat oder Zinkoctoat. Ebenfalls denkbar ist der Einsatz von Lewis-sauren Metallverbindungen, die Molybdän, Vanadium, Zirkonium, Cäsium, Bismuth oder Wolfram enthalten.

Im erfindungsgemäßen Verfahren wird der Katalysatorkomponente, sofern mitverwendet, in Mengen von 0,001 - 5,0 Gew.-%, bevorzugt 0,001 - 0,1 Gew.-% bezogen auf den Festkörpergehalt des Verfahrensprodukts eingesetzt.

Im erfindungsgemäßen Verfahren können optional an beliebiger Stelle Lösemittel und/oder Reaktivverdünner eingesetzt werden. Der Einsatz von Lösemitteln und/oder Reaktiwerdünnern ist nicht bevorzugt.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der Strahlenhärtung ebenfalls (co)polymerisieren und somit in das Polymernetzwerk eingebaut werden und gegenüber NCO-Gruppen inert sind. Solche Reaktivverdünner sind in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, 1,2-Propandiol, 1,3-Propandiol, Diethylenglykol, Dipropylenglykol, die isomeren Butandiole, Neopentylglykol, 1,6-Hexandiol, 2-Ethylhexandiol und Tripropylenglykol oder auch alkoxylierte Derivate dieser Alkohole. Bevorzugte zweiwertige Alkohole sind 1,6-Hexandiol, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate. Ein geeigneter sechswertiger Alkohol ist Dipentaerythrit oder dessen alkoxylierte Derivate. Besonders bevorzugt sind die alkoxylierten Derivate der genannten drei- bis sechswertigen Alkohole.

Die erfindungsgemäßen Bindemittel werden vorzugsweise gegen vorzeitige Polymerisation stabilisiert. Daher gibt man als Bestandteil einer oder mehrerer Komponenten ((a) bis (f)) vor und/oder während der Reaktion Stabilisatoren zu, die die Polymerisation inhibieren. Beispiele für geeignete Stabilisatoren sind z.B. Phenothiazin und Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente a) gebunden werden können. Hierfür besonders geeignet sind 2,2,6,6-Tetramethyl-4-hydroxypiperidin-N-Oxid.

Andere Stabilisatoren wie z. B. Verbindungen der Klasse der HALS (HALS = hindered amine light stabilizers) können ebenfalls verwendet werden, sind aber nicht bevorzugt.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktion bei Vorhandensein von Isocyanat zu verhindern.

Während der Herstellung der erfindungsgemäßen Bindemittel kann ein Stabilisator zugesetzt werden und abschließend, um eine Langzeitstabilität zu erreichen, nochmals mit einem phenolischen Stabilisator nachstabilisiert und ggf. mit Luft das Reaktionsprodukt gesättigt werden.

Es ist bevorzugt, im erfindungsgemäßen Verfahren die Stabilisatorkomponente in Mengen von 0,001 - 5,0 Gew.-%, bevorzugt 0,01 - 2,0 Gew.-% und besonders bevorzugt 0,05 - 1,0 Gew.-% bezogen auf den Festkörpergehalt des Verfahrensprodukts einzusetzen.

Bevorzugt wird das erfindungsgemäße Verfahren in einem Rührreaktor durchgeführt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, Messung des Brechungsindex, Messung des O H-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Spektroskopie zur Kontrolle der vorhandenen freien NCO Gruppen (für aliphatische NCO-Gruppen liegt die Bande im IR-Spektrum bei ca. v = 2272 cm⁻¹) und GC-Untersuchungen auf nicht umgesetzte Verbindungen aus a) und gegebenenfalls b).

Die nach dem erfindungsgemäßen Verfahren erhältlichen ungesättigten Polyurethan(meth)acrylate weisen bei einem Festkörpergehalt von 100 Gew.-% bevorzugt Scherviskositäten bei 23°C von ≤ 100 000 mPas, besonders bevorzugt ≤ 50 000 mPas auf und besonders bevorzugt ≤ 30 000 mPas. Die Viskosität wird mit einem Kegel-Platte Rotationsviskosimeter, MCR 51 der Firma Anton-Paar, DE, mit einer Schergeschwindigkeit von 50 s⁻¹ nach ISO/DIS 3219:1990 bestimmt.

Die nach dem erfindungsgemäßen Verfahren hergestellten Polyurethan(meth)acrylate lassen sich beliebig mit Wasser verdünnen, um die gewünschte Viskosität einzustellen.

Die erfindungsgemäßen strahlenhärtenden Urethan(meth)acrylate können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings Voraussetzung, dass bei Strahlenhärtung mindestens eines der beiden zu verklebenden oder miteinander abzudichtenden Substrate für die zur Härtung verwendete Strahlung durchlässig, also i. d. R. transparent sein muss. Bei Verwendung von Elektronenstrahlung zur Härtung ist auf eine hinreichende Durchlässigkeit für Elektronen zu achten. Bevorzugt ist die Verwendung der Urethan(meth)acrylate als Bindemittel in Lacken und Beschichtungen.

Ein weiterer Gegenstand der Erfindung sind Beschichtungsmittel enthaltend
A) ein oder mehrere der erfindungsgemäßen Urethan(meth)acrylate,
B) gegebenenfalls weitere von A) verschiedene Verbindungen, die unter Einwirkung aktinischer Strahlung mit ethylenisch ungesättigten Verbindungen unter Polymerisation reagierende Gruppen aufweisen,
C) gegebenenfalls weitere nicht strahlenhärtbare wässrige Bindemittel,
D) Initiatoren,
E) gegebenenfalls Lösemittel und/oder Wasser,
F) gegebenenfalls Hilfs- und Zusatzstoffe.

Zu den Verbindungen der Komponente B) gehören nicht wässrige Verbindungen wie insbesondere Urethan(meth)acrylate bevorzugt auf Hexamethylendiisocyanat-, 1-Isocyanato-3,3,5-trimethyl-5-isocyanatomethyl-cyclohexan-, 4,4'-Diisocyanatodicyclohexylmethan- und/oder Trimethylhexamethylendiisocyanat-Basis, welche gegebenenfalls mit Isocyanurat-, Allophanat-, Biuret-, Uretdion- und/oder Iminooxadiazintriongruppen modifiziert sein können, welche keine gegenüber Isocyanatgruppen reaktiven Gruppen aufweisen. Weiterhin können die bereits beschriebenen und in der Technik der strahlenhärtenden Beschichtungen bekannten Reaktivverdünner als Bestandteil von B) verwendet werden, sofern sie keine mit NCO-Gruppen reaktiven Gruppen enthalten.

Zu den Verbindungen der Komponente B) gehören auch in Wasser gelöste oder dispergierte Verbindungen wie insbesondere Dispersionen, die ungesättigte, strahlenhärtbare Gruppen enthalten, wie z. B. ungesättigte, strahlenhärtbare Gruppen enthaltende Dispersionen auf Polyester-, Polyurethan-, Polyepoxy(meth)acrylat-, Polyether-, Polyamid-, Polysiloxan-, Polycarbonat-, Polyepoxyacrylat-, Polyesteracrylat-, Polyurethan-Polyacrylat- und/oder Polyacrylatbasis. Die ungesättigten, strahlenhärtbaren Gruppen können dabei an einem der genannten Polymere gebunden vorliegen und/oder in Form von strahlenhärtbaren Monomeren, so genannten Reaktivverdünnern, dispergiert neben den genannten Polymeren vorliegen.

Zu den Verbindungen der Komponente C) gehören in Wasser gelöste oder dispergierte Verbindungen wie insbesondere Dispersionen, die keine ungesättigten, strahlenhärtbaren Gruppen enthalten, wie z. B. Dispersionen auf Polyester-, Polyurethan-, Polyether-, Polyamid-, Polysiloxan-, Polycarbonat-, Polyurethan-Polyacrylat- und /oder Polyacrylatbasis.

Insbesondere, wenn es sich bei den Komponenten B) und C) um in Wasser gelöste oder dispergierte Verbindungen wie insbesondere Dispersionen handelt, ist der Zusatz der erfindungsgemäßen, wasserverdünnbaren Urethan(meth)acrylate A) vorteilhaft, da auf diese Weise der Festkörpergehalt der Komponenten B) und C) ohne wesentlichen Anstieg der resultierenden Viskosität angehoben werden kann.

Als Initiatoren der Komponente D) für eine radikalische Polymerisation können durch Strahlung und/oder thermisch aktivierbare Initiatoren zum Einsatz kommen. Fotoinitiatoren, die durch UV- oder sichtbares Licht aktiviert werden, sind hierbei bevorzugt. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z.B. Benzophenone in Kombination mit tertiären Aminen, Alkylbenzophenone, 4,4`-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Fotoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Beschichtungsmittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamid], 1-[(cyano-1-methylethyl)azo]formamide, 2,2'-Azobis(N-butyl-2-methylpropionamid), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von Fotoinitiatoren und thermisch aktivierbaren Initiatoren zu verwenden.

Als Komponente E) können optional auch organische Lösungsmittel mit verwendet werden, die dem Fachmann an sich bekannt sind. Es ist aber bevorzugt, Wasser als einziges Verdünnungsmittel einzusetzen.

Als Hilfs- und Zusatzstoffe (Komponente F) können zur Erhöhung der Wetterstabilität der gehärteten Lackschicht auch UV-Absorber und/oder HALS-Stabilisatoren enthalten sein. Bevorzugt ist eine Kombination von UV-Absorbenr und HALS-Stabilisatoren. Erstere weisen vorteilhaft einen Absorptionsbereich von maximal 390 nm auf, beispielsweise UV-Absorber wie Triphenyltriazintypen (z.B. Tinuvin^{®} 400 (Ciba Spezialitätenchemie GmbH, Lampertheim, DE)), Benztriazole (z.B. Tinuvin® 622 (Ciba Spezialitätenchemie GmbH, Lampertheim, DE)) oder Oxalsäuredianilide (z. B. Sanduvor^{®} 3206 (Clariant, Muttenz, CH) )) und werden in 0,5 - 3,5 Gew.-% bezogen auf Festharz zugegeben. Geeignete HALS-Stabilisatoren sind kommerziell erhältlich (z.B. Tinuvin^{®} 292 oder Tinuvin^{®} 123 (Ciba Spezialitätenchemie GmbH, Lampertheim, DE) oder Sanduvor^{®} 3258 (Clariant, Muttenz, CH)). Bevorzugte Mengen sind 0,5-2,5 Gew.-% bezogen auf Festharz.

Ebenfalls können in F) weitere in der Lacktechnologie bekannte Hilfs- und Zusatzstoffe wie z.B. Pigmente einschließlich Metallic-Effektpigmente, Farbstoffe, Mattierungsmittel, Füllstoffe, Verlaufs-, Benetzungs- und Entlüftungsadditive, Slip-Additive, Nanopartikel, Anti-Vergilbungsadditive, Verdicker und Additive zur Reduktion der Oberflächenspannung enthalten sein.

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Insbesondere eignen sich die erfindungsgemäßen Beschichtungsmittel zur Beschichtung von Holz, holzhaltigen Substraten, Kork und Cellulosefaser-haltigen Substraten, wie Papier oder Pappe.

Zur Aushärtung können durch Ablüften z.B. enthaltenes Wasser oder gegebenenfalls Lösemittel ganz oder teilweise entfernt werden.

Während des Ablüftens oder im Anschluss kann thermisch und/oder photochemisch ausgehärtet werden.

Falls notwendig kann die thermische Härtung bei Raumtemperatur aber auch bei erhöhter Temperatur, vorzugsweise bei 40 - 160 °C, bevorzugt bei 60 - 130 °C, besonders bevorzugt bei 80 - 10 °C erfolgen.

Bei Verwendung von Photoinitiatoren in D) erfolgt die Strahlungshärtung bevorzugt durch Einwirkung aktinischer Strahlung, beispielsweise durch Bestrahlung mit UV-Strahlung oder Tageslicht, z.B. Licht der Wellenlänge 200 bis 700 nm oder durch Bestrahlen mit energiereichen Elektronen (Elektronenstrahlung, 150 bis 300 keV). Als Strahlungsquellen für Licht oder UV-Strahlung dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängenbereich von 200 bis 600 nm verwendet.

Bei Verwendung von thermisch aktivierbaren Initiatoren in D) erfolgt die Härtung durch Erhöhung der Temperatur. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Es ist bevorzugt, die Aushärtung durch aktinische Strahlung vorzunehmen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

Ein weiterer Gegenstand der Erfindung ist ein Verfahren zur Herstellung von Beschichtungen von Holz, holzartigen Substraten, Kork und cellulosefaser-haltigen Substraten, dadurch gekennzeichnet, dass das erfindungsgemäße Beschichtungsmittel wie vorher beschrieben auf Holz, holzartige Substrate, Kork und cellulosefaser-haltige Substrate aufgetragen und anschließend wie vorher beschrieben gehärtet wird.

Ein weiterer Gegenstand der Erfindung sind Substrate beschichtet mit den erfindungsgemäßen Beschichtungsmitteln, die die nach dem erfindungsgemäßen Verfahren hergestellten Urethan(meth)acrylate enthalten.

### Beispiele

Alle Prozentangaben beziehen sich sofern nicht abweichend angegeben auf Gewichtsprozent.

Der Feststoffgehalt der Polyurethandispersion wurde gravimetrisch nach Abdampfen aller nichtflüchtigen Bestandteile gemäß DIN EN ISO 3251 bestimmt.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen der Polyurethan(meth)acrylate wurden bei 23°C mit einem Platte-Platte Rotationsviskosimeter, RotoVisko 1 der Firma Haake, DE, mit einer Schergeschwindigkeit von 47,94/s nach ISO/DIS 3219:1990 durchgeführt.

Die zur Zeit der Versuchsdurchführung herrschende Umgebungstemperatur von 23 °C wird als RT bezeichnet.

Die OH-Zahl würde gemäß DIN 53240-2 bestimmt.

Die Säure-Zahl wurde gemäß DIN EN ISO 2114 bestimmt.

| | |
|---|---|
| **Desmodur^{®} N 3600:** | aliphatisches Polyisocyanat (niedrigviskoses HDI-Trimerisat), lösemittelfrei, NCO-Gehalt 23,0 %, Viskosität: 1200 mPa·s/23°C (Bayer MaterialScience AG, Leverkusen, DE). |
| **MPEG 500:** | Methanol-gestartetes Polyethylenoxidmono-o 1 mit einem zahlenmittleren Molekulargewicht (Mn) von 500 g/mol. |
| **Desmodur^{®} T80:** | 2,4- und 2,6-Toluoldiisocyanat (TDI) im Verhältnis 80 : 20, Bayer MaterialScience AG, Leverkusen, DE |
| **Carbowax^{®} PEG 3000:** | Polyethylenoxiddiol mit einem zahlenmitteren Molekulargewicht (Mn) von 3000 g/mol, Dow, Midland, Michigan, US |
| **Carbowax^{®} PEG 4000:** | Polyethylenoxiddiol mit einem zahlenmittleren Molekulargewicht (Mn) von 4000 g/mol, Dow, Midland, Michigan, US |
| **Polyol R 4290:** | alkoxyliertes Polyol (15-fach ethoxyliertes Pentaerythrit), Perstorp Holding AB, Perstorp, SE |
| **Polyol R 4630:** | fünffach ethoxyliertes Pentaerythrit Perstorp Holding AB, Perstorp, SE |
| **Epilox^{®} A-1900:** | Bisphenol A-Diglycidylether, Leuna-Harze GmbH, Leuna, DE |

### Teilacryliertes alkoxyliertes Polyol 1

In einem 4000 ml Vierhals-Glaskolben mit Rückflusskühler, beheizbarem Ölbad, mechanischem Rührer, Luftdurchleitung (4 l/h), Innenthermometer, Tropftrichter und Wasserabscheider wurden 910,5 g eines Trimethylolpropan-gestarteten Ethylenoxidpolyethers mit einer OH-Zahl von 255 mg KOH/g Substanz (4 Ethylenoxideinheiten pro OH-Gruppe des Trimethylolpropans), 198,2 g Acrylsäure, 11,5 g p-Toluolsulfonsäure, 9,2 g p-Methoxyphenol und 0,6 g 2,5-Di-tert-butylhydrochinon in 455,2 g Isooctan vorgelegt und auf 95 °C erhitzt. Nach ca. 36 Stunden unter Rückfluss wurden 50,5g Wasser abgeschieden, zu diesem Zeitpunkt betrug die Säurezahl 3,4 mg KOH/g Substanz. Das Isooctan wurde bei 50°C und vermindertem Druck abdestilliert. Anschließend wurden bei 90 °C 19,6 g Glycidylmethacrylat zugeben und bei 100 °C für eine weitere Stunde gerührt. Es wurde ein farbloses Harz mit einer Säurezahl von 0,4 mg KOH/g, einer OH-Funktionalität (pro Molekül) von 1,11, einem Alkylenoxidgehalt von 66 Gew.-% und einer Viskosität von 189 mPas (23°C) erhalten.

### Beispiel 1: erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2l/h), Innenthermometer und Tropftrichter wurden 350,12 g Desmodur^{®} N3600, 1,20 g 2,6-Di-tert-butyl-4-methylphenol und 0,72 g Dibutylzinndilaurat vorgelegt und auf 60 °C erwärmt. Dann wurden nacheinander zunächst 88,66 g Hydroxyethylacrylat, dann 570,47 g teilacryliertes alkoxyliertes Polyol 1 und schließlich 188,74 g MPEG 500 so zugetropft, dass eine Temperatur von 65 °C nicht überschritten wurde. Es wurde nachgerührt, bis der theoretische NCO-Wert unter 0,2 % gesunken war. Es wurde ein klares, leicht gelbliches Harz mit einem Rest-NCO-Gehalt von 0,0 % und einer Viskosität von 19040 mPas (23 °C) erhalten.

### Beispiel 2 (Vergleich): analog zu Beispiel 3 aus DE-A 102010001956

In einem 2000 ml-Vierhals-Glaskolben mit Rückflusskühler, beheizbarem Ölbad, mechanischem Rührer, Luftdurchleitung (2l/h), Innenthermometer und Tropftrichter wurden 363,03 g Polyethylenglykol 1000, 0,56 g Dimethylolpropionsäure , 3,79 g Neopentylglykol, 67,36 g Hydroxyethylacrylat, 191,68 g Dipropylenglykoldiacrylat, 0,56 g 2,6-Di-tert-butyl-4-methylphenol, 0,06 g Phenothiazin, 0,56 g Tempol, 0,03g 2,5-Di-tert.-butylhydrochinon und 0,40g Dibutylzinndilaurat vorgelegt und auf 60°C erwärmt. Es wurden dann 139,00 g Desmodur^{®} T80 so zugetropft, dass die Temperatur von 70 °C nicht überschritten wurde. Es wurde nachgerührt, bis ein NCO-Wert von 0,26 % erreicht war. Anschließend wurden 21,46 g Dibutylamin zugegeben und weitere zwei Stunden bei 65 °C gerührt. Abschließend wurden weitere 117,46 g Dipropylenglykoldiacrylat beigemengt. Man erhielt ein farbloses Harz mit einer Viskosität von 8000 mPas(23 °C).

### Beispiel 3 (Vergleich): analog zu Beispiel 1 aus WO-A 2009/095432

In einem 2000 ml-Vierhals-Glaskolben mit Rückflusskühler, beheizbarem Ölbad, mechanischem Rührer, Luftdurchleitung (2l/h), Innenthermometer und Tropftrichter wurden 210,6 g Carbowax^{®} PEG 3000, 187,2 g Carbowax^{®} PEG 4000 zusammen mit 58,50 g Isophorondiisocyanat (s.o.) und 316 g Aceton vorgelegt und auf 50 °C erwärmt. Es wurden dann 0,8 g Dibutylzinndilaurat zugegeben und bei 60 °C etwa zwei Stunden lang gerührt. Anschließend wurden zunächst 0,8 g 2,6-Di-tert-butyl-4-methylphenol und dann 336 g Pentaerythittriacrylat zugegeben und es wurde bei 70 °C gerührt, bis ein NCO-Wert von weniger als 0,2 % erreicht worden war. Nach Abdestillieren des Acetons unter vermindertem Druck wurde ein bei 23 °C festes Harz erhalten.

### Beispiel 4 (Vergleich): analog zu Beispiel 2 aus WO-A 2009/095432

In einem 2000 ml-Vierhals-Glaskolben mit Rückflusskühler, beheizbarem Ölbad, mechanischem Rührer, Luftdurchleitung (2l/h), Innenthermometer und Wasserabscheider wurden 674 g Polyol R 4290, 935 g Polyol R 4630, 653 g Isooctan, 16,8 g p-Toluolsulfonsäure, 6,7 g 4-Methoxyphenol, 0,45 g 2,5-Di-tert.-butylhydrochinon und 751 g Acrylsäure vorgelegt und die Temperatur langsam auf den Siedepunkt des Isooctans (95-105 °C) erhöht, bis sich ein kräftiger Rückfluss eingestellt hat. Es wurden dann ca. 125 g Wasser abgeschieden und die Reaktion wurde beim Erreichen einer Säurezahl von 4 mg KOH/g abgebrochen. Der Wasserabscheider wurde durch eine Destillationsbrücke ersetzt und das Isooctan wurde zunächst bei Normaldruck, später unter vermindertem Druck bei 50 mbar abdestilliert. Anschließend wurden 76 g Epilox^{®} A-1900 beigemengt und ca. eine Stunde lang bei 100 °C gerührt.

808 g des so erhaltenen Produktes wurden in einem 1000 ml-Vierhals-Glaskolben mit Rückflusskühler, beheizbarem Ölbad, mechanischem Rührer, Luftdurchleitung (11/h), Innenthermometer und Tropftrichter zusammen mit 0,44 g 2,6-Di-tert-butyl-4-methylphenol und 0,74 g Dibutylzinndilaurat vorgelegt und auf 60 °C erwärmt. Es wurden dann 40,8 g Desmodur^{®} I langsam zugetropft und die Mischung bei 60 °C nachgerührt, bis der NCO-Gehalt unter 0,2 % gefallen war. Es wurde ein farbloses Harz mit einer Viskosität von 830 mPas erhalten.

### Lackformulierung und anwendungstechnische Prüfung

Die hergestellten wasserverdünnbaren Polyurethan(meth)acrylate wurden unter Scherung im Dispergator bei 2000 Umdrehungen über 10 Minuten mit 3 Gew.-% Irgacure^{®} 500 (Mischung von Benzophenon und (1-Hydroxycyclohexyl)phenylketon der Fa. BASF SE, Ludwigshafen, DE) und der entsprechenden Menge Wasser (s. Tabelle 1) vermengt. Mittels eines Kastenrakels mit einem Spalt von 90 µm wurde die Mischung als dünner Film auf Glasplatte oder Eichenholzplatte aufgezogen. Nach UV-Bestrahlung (Quecksilbermitteldruckstrahler, IST Metz GmbH, Nürtingen, DE, 411 mJ/cm²) wurden transparente, feste Beschichtungen erhalten.

Die Reaktivität wurde gemessen, indem verschiedene Bandlaufgeschwindigkeiten bei der UV-Bestrahlung (Quecksilbermitteldruckstrahler, IST Metz GmbH, Nürtingen, DE) der auf Glas aufgezogenen Produkte (90 µm), (siehe oben) eingestellt wurden. Es ist die höchste Bandlaufgeschwindigkeit angegeben, bei der noch ein klebfreier Film erhalten wurde. Demnach bedeutet ein höherer Wert auch eine höhere Reaktivität.

Die Lagerstabilität des Lackes wurde bei 23 °C (RT) hinsichtlich dessen geprüft, nach wie vielen Tagen eine Phasenseparation oder eine Sedimentation stattfindet.

Die Haftung auf Eiche wurde mittels Gitterschnitt gemäß DIN EN ISO 2409 geprüft. (Note 0: Die Schnittränder sind vollkommen glatt; keines der Quadrate des Gitters ist abgeplatzt.)

Die Pendelhärte nach König wurde auf Glas gemäß DIN EN ISO 1522 geprüft.

Die Prüfung gegen Chemikalien, wie 10%ige Natronlauge oder 48%iges Ethanol, erfolgte gemäß DIN 68861-1 und DIN EN 12720 auf einer Eichenholzplatte. (Note 5: Lack bleibt unverändert, Note 1: starke Veränderung der Oberfläche, z.B. Lösen des Lackes)

**Tabelle 1: Prüfergebnisse auf Holz bzw. Glas**

| **Beispiele** | **1** | **2 (Vergleich)** | **3 (Vergleich)** | **4 (Vergleich)** |
|---|---|---|---|---|
| Viskosität 100% [mPas] | 19040 | 8000 | fest | 830 |
| Reaktivität | 40 m/min | 25 m/min | 10 m/min | 15 m/min |
| Pendelhärte nach König | 80 s | 26 s | 70 s | 40 s |
| Ethanol/Wasser (48%)-beständigkeit | 4 | 1 | 1 | 3 |
| Haftung (Eiche) | 5 | 5 | 5 | 5 |
| Viskosität 90% [mPas] | 4400 | 2000 | 11000 | 370 |
| Stabilität in Tagen | >40 | >40 | >40d | 10 |
| Haftung (Eiche) | 5 | 5 | 5 | 5 |
| Viskosität 80 % [mPas] | 2.660 | 1.800 | 5.000 | 330 |
| Lagerstabilität in Tagen | >40 | 2 | >40 | 1 |
| Haftung (Eiche) | 0 | 0 | 0 | 0 |
| Viskosität 50 % [mPas] | 1.900 | 180 | 7.000 | - |
| Stabilität in Tagen | >40 | 1 | >40 | ₋(1) |
| Haftung (Eiche) | 0 | 0 | 0 | - |

| | | | | |
|---|---|---|---|---|
| ⁽¹⁾ Phasentrennung sofort oder wenige Minuten nach Ansetzen des Lackes | | | | |

Alle Produkte zeigen eine sehr gute Haftung auf Holz, sobald sie zumindest mit 20 Gew.-% Wasser verdünnt wurden.

Das erfindungsgemäße Beispiel 1 weist eine akzeptable Härte von mehr als 50 Pendelsekunden auf und ist in größeren Verdünnungen in Wasser stabil. Im Gegensatz zum Beispiel 3 (Vergleich) ist das erfindungsgemäße Beispiel 1 aber auch bei einem Festkörpergehalt von 100 Gew.-% (also unverdünnt) niederviskos und nicht fest und weist auch in den verschiedenen Verdünnungen deutlich niedrigere Viskositäten auf. Weiterhin weist Beispiel 1 eine bessere Chemikalienbeständigkeit (Ethanol) auf. Schließlich ist deutlich zu erkennen, dass das erfindungsgemäße Beispiel eine deutlich höhere Reaktivität aufweist, als die Vergleichsbeispiele.

## Patentansprüche

1. Verfahren zur Herstellung von niedrigviskosen, wasserverdünnbaren Polyurethan(meth)acrylaten, **dadurch gekennzeichnet, dass** die Polyurethan(meth)acrylate erhältlich sind durch Umsetzung der Komponenten
(a) mindestens ein oligomeres Polyisocyanat mit durchschnittlich mindestens drei Isocyanatgruppen,
(c) mindestens ein Polyoxyalkylenmono-ol,
(d) mindestens ein Hydroxyalkyl(meth)acrylat,
(e) mindestens ein Polyoxyalkylenpolyol auf Basis eines Startermoleküls mit mindestens drei Hydroxyfunktionen, das teilweise durch Veresterung mit (Meth)acrylsäure so umgesetzt ist, dass noch durchschnittlich 0,2 bis 1,5, bevorzugt 0,3 bis 1,3, besonders bevorzugt 0,5 bis 1,2 Hydroxyfunktionen verbleiben,
**dadurch gekennzeichnet, dass** das Reaktionsprodukt einen NCO-Gehalt von weniger als 0,5 Gew.-% aufweist, und dass das Polyoxyalkylenmono-ol (c) mindestens 30 mol-% Ethylenoxideinheiten enthält.

2. Verfahren gemäß Anspruch 1, **dadurch gekennzeichnet, dass** (b) mindestens ein weiteres Isocyanat mit mindestens zwei Isocyanatfunktionen enthalten ist.

3. Verfahren gemäß Anspruch 1 oder 2, **dadurch gekennzeichnet, dass** eine Komponente (f) enthalten ist, die mindestens eine Verbindung mit mindestens einer gegenüber Isocyanat reaktiven Gruppe und mindestens einer ionischen und/oder potentiell ionischen Funktion besitzt.

4. Verfahren gemäß einem der Ansprüche 1 bis 3, **dadurch gekennzeichnet, dass** (a) mindestens ein oligomeres Polyisocyanat auf Basis von 1,6-Hexamethylendiisocyanat ist.

5. Verfahren gemäß einem der Ansprüche 1 bis 4 , **dadurch gekennzeichnet, dass** (a) mindestens ein oligomeres Polyisocyanat mit Isocyanuratgruppen ist.

6. Verfahren gemäß einem der Ansprüche 1 bis 5, **dadurch gekennzeichnet, dass** es sich bei der Komponente (c) um ein Polyoxyethylenmono-ol mit einer OH-Zahl von 18 bis 238 mg KOH/g handelt.

7. Verfahren gemäß einem der Ansprüche 1 bis 6, **dadurch gekennzeichnet, dass** (e) durchschnittlich 0,5 bis 8,0 Ethylenoxideinheiten pro OH-Gruppe des Startermolekül enthält.

8. Verfahren gemäß einem der Ansprüche 1 bis 7, **dadurch gekennzeichnet, dass** das Verfahren mit 20 bis 50 Gew.-% der Komponente (a), 0 bis 20 Gew.-% der Komponente (b), 10 bis 30 Gew.-% der Komponente (c), 4 bis 20 Gew.-% der Komponente (d), 25 bis 60 Gew.-% der Komponente (e) und 0 bis 10 Gew.-% der Komponente f) durchgeführt wird, mit der Maßgabe, dass die Summe der Gew.-% der Komponenten (a) bis (f) 100 beträgt

9. Wasserverdünnbare Polyurethan(meth)acrylate, erhältlich nach dem Verfahren gemäß einem der Ansprüche 1 bis 8.

10. Wasserverdünnbare Polyurethan(meth)acrylate gemäß Anspruch 9 für die Herstellung von Beschichtungen, insbesondere von Lacken und Klebstoffen.

11. Beschichtungsmittel enthaltend die wasserverdünnbaren Polyurethan(meth)acrylate gemäß Anspruch 9.

12. Beschichtungsmittel enthaltend
A) ein oder mehrere Urethan(meth)acrylate gemäß Anspruch 9,
B) von A) verschiedene Verbindungen, die unter Einwirkung aktinischer Strahlung mit ethylenisch ungesättigten Verbindungen unter Polymerisation reagierende Gruppen aufweisen,
C) nicht strahlenhärtbare, wässrige Bindemittel
D) Initiatoren,
E) gegebenenfalls Wasser und/oder Lösemittel
F) gegebenenfalls Hilfs- und Zusatzstoffe.

13. Verwendung der Beschichtungsmittel gemäß Anspruch 11 zur Herstellung von Beschichtungen von Holz, holzartigen Substraten, Kork und Cellulosefaser-haltigen Substraten.

14. Substrate beschichtet mit den Beschichtungsmitteln gemäß Anspruch 11.

## Claims

1. Process for preparing low-viscosity, water-dilutable polyurethane (meth)acrylates, **characterized in that** the polyurethane (meth)acrylates are obtainable by reaction of the following components:
(a) at least one oligomeric polyisocyanate having on average at least three isocyanate groups,
(c) at least one polyoxyalkylene monool,
(d) at least one hydroxyalkyl (meth)acrylate,
(e) at least one polyoxyalkylene polyol based on a starter molecule having at least three hydroxyl functions, which has been partially reacted by esterification with (meth)acrylic acid such that there are still on average 0.2 to 1.5, preferably 0.3 to 1.3, more preferably 0.5 to 1.2 hydroxyl functions remaining,
**characterized in that** the reaction product has an NCO content of less than 0.5 wt%, and **in that** the polyoxyalkylene monool (c) contains at least 30 mol% of ethylene oxide units.

2. Process according to Claim 1, **characterized in that** (b) at least one further isocyanate having at least two isocyanate functions is present.

3. Process according to Claim 1 or 2, **characterized in that** a component (f) is present which possesses at least one compound having at least one isocyanate-reactive group and at least one ionic and/or potentially ionic function.

4. Process according to any of Claims 1 to 3, **characterized in that** (a) is at least one oligomeric polyisocyanate based on hexamethylene 1,6-diisocyanate.

5. Process according to any of Claims 1 to 4, **characterized in that** (a) is at least one oligomeric polyisocyanate having isocyanurate groups.

6. Process according to any of claims 1 to 5, **characterized in that** the component (c) is a polyoxyethylene monool having an OH number of 18 to 238 mg KOH/g.

7. Process according to any of Claims 1 to 6, **characterized in that** (e) contains on average 0.5 to 8.0 ethylene oxide units per OH group of the starter molecule.

8. Process according to any of Claims 1 to 7, **characterized in that** the process is carried out with 20 to 50 wt% of component (a), 0 to 20 wt% of component (b), 10 to 30 wt% of component (c), 4 to 20 wt% of component (d), 25 to 60 wt% of component (e) and 0 to 10 wt% of component (f), with the proviso that the sum of the wt% of components (a) to (f) is 100.

9. Water-dilutable polyurethane (meth)acrylates, obtainable by the process according to any of Claims 1 to 8.

10. Water-dilutable polyurethane (meth)acrylates according to Claim 9 for producing coatings, more particularly paints, varnishes and adhesives.

11. Coating compositions comprising the water-dilutable polyurethane (meth)acrylates according to Claim 9.

12. Coating compositions comprising
A) one or more urethane (meth)acrylates according to Claim 9,
B) compounds different from A), which have groups which react, with polymerization, with ethylenically unsaturated compounds on exposure to actinic radiation,
C) non-radiation-curable, aqueous binders,
D) initiators,
E) optionally water and/or solvents,
F) optionally auxiliaries and adjuvants.

13. Use of the coating compositions according to Claim 11 for producing coatings on wood, wood-like substrates, cork and cellulose fibre-containing substrates.

14. Substrates coated with the coating compositions according to Claim 11.

## Revendications

1. Procédé pour la préparation de polyuréthane-(méth)acrylates diluables à l'eau, de basse viscosité, **caractérisé en ce que** les polyuréthane-(méth)acrylates peuvent être obtenus par transformation des composants
(a) au moins un polyisocyanate oligomère comprenant en moyenne au moins trois groupes isocyanate,
(c) au moins un polyoxyalkylène-mono-ol,
(d) au moins un (méth)acrylate d'hydroxyalkyle,
(e) au moins un polyoxyalkylènepolyol à base d'une molécule de départ présentant au moins trois fonctions hydroxy, qui est en partie transformé par estérification avec de l'acide (méth)acrylique de manière telle qu'il reste en moyenne encore 0,2 à 1,5, de préférence 0,3 à 1,3, de manière particulièrement préférée 0,5 à 1,2 fonction hydroxy,
**caractérisé en ce que** le produit de réaction présente une teneur en NCO inférieure à 0,5% en poids et **en ce que** le polyoxyalkylène-mono-ol (c) contient au moins 30% en mole d'unités d'oxyde d'éthylène.

2. Procédé selon la revendication 1, **caractérisé en ce que** (b), au moins un autre isocyanate présentant au moins deux fonctions isocyanate, est contenu.

3. Procédé selon la revendication 1 ou 2, **caractérisé en ce qu'**un composant (f) est contenu, qui présente au moins un composé présentant au moins un groupe réactif par rapport à isocyanate et au moins une fonction ionique et/ou potentiellement ionique.

4. Procédé selon l'une quelconque des revendications 1 à 3, **caractérisé en ce que** (a) est au moins un polyisocyanate oligomère à base de diisocyanate de 1,6-hexaméthylène.

5. Procédé selon l'une quelconque des revendications 1 à 4, **caractérisé en ce que** (a) est au moins un polyisocyanate oligomère présentant des groupes isocyanurate.

6. Procédé selon l'une quelconque des revendications 1 à 5, **caractérisé en ce qu'**il s'agit, pour le composant (c), d'un polyoxyéthylène-mono-ol présentant un indice d'OH de 18 à 238 mg de KOH/g.

7. Procédé selon l'une quelconque des revendications 1 à 6, **caractérisé en ce que** (e) contient en moyenne 0,5 à 8,0 unités d'oxyde d'éthylène par groupe OH de la molécule de départ.

8. Procédé selon l'une quelconque des revendications 1 à 7, **caractérisé en ce que** le procédé est réalisé avec 20 à 50% en poids de composant (a), 0 à 20% en poids de composant (b), 10 à 30% en poids de composant (c), 4 à 20% en poids de composant (d), 25 à 60% en poids de composant (e) et 0 à 10% en poids de composant (f), à condition que la somme des % en poids des composants (a) à (f) vaille 100.

9. Polyuréthane-(méth)acrylates diluables à l'eau, pouvant être obtenus selon le procédé selon l'une quelconque des revendications 1 à 8.

10. Polyuréthane-(méth)acrylates diluables à l'eau selon la revendication 9 pour la préparation de revêtements, en particulier de laques et d'adhésifs.

11. Agents de revêtement contenant les polyuréthane-(méth)acrylates diluables à l'eau selon la revendication 9.

12. Agents de revêtement, contenant
A) un ou plusieurs uréthane-(méth)acrylates selon la revendication 9,
B) des composés différents de ceux de A), qui présentent des groupes réagissant avec polymérisation sous l'effet d'un rayonnement actinique avec des composés éthyléniquement insaturés,
C) des liants aqueux, non durcissables par un rayonnement,
D) des initiateurs,
E) le cas échéant de l'eau et/ou des solvants
F) le cas échéant des adjuvants et des additifs.

13. Utilisation des agents de revêtement selon la revendication 11 pour la préparation de revêtements du bois, de substrats de type bois, du liège et de substrats contenant des fibres de cellulose.

14. Substrats revêtus par les agents de revêtement selon la revendication 11.
